# EUROPÄISCHE PATENTANMELDUNG

(11) **EP 2 597 298 A2**
(43) Veröffentlichungstag der Anmeldung: **29.05.2013**
(21) Anmeldenummer: 12007723.5
(22) Anmeldetag: 15.11.2012
(51) Int. Cl.: F02P 23/04, G01L 23/22

(54) **Laserzündkerze**

(30) Priorität: 22.11.2011 AT 17252011
(71) Anmelder: GE Jenbacher GmbH & Co OHG, 6200 Jenbach (AT)
(72) Erfinder: Gruber, Friedrich, 6283 Hippach (AT); Trapp, Christian, 6060 Hall (AT)
(74) Vertreter: Gangl, Markus

(57) **Zusammenfassung**

Laserzündkerze (1), mit einem eine axiale Erstreckung aufweisenden Gehäuse (2), einem Befestigungsabschnitt (3) zur Befestigung des Gehäuses (2) in einem Zylinderkopf (11) einer Brennkraftmaschine und wenigstens einem Drucksensor (5), dadurch gekennzeichnet, dass ein vom Befestigungsabschnitt (3) in axialer Erstreckung des Gehäuses (2) betrachtet beabstandeter Dichtsitz (4) vorgesehen ist und dass der wenigstens eine Drucksensor (5) in axialer Erstreckung des Gehäuses (2) betrachtet zwischen dem Dichtsitz (4) und dem Befestigungsabschnitt (3) angeordnet ist.

## Beschreibung

Die vorliegende Erfindung betrifft eine Laserzündkerze mit den Merkmalen des Oberbegriffs des Anspruchs 1.

Moderne Brennkraftmaschinen, insbesondere Gas-Otto-Motoren, mit einer Leistungsklasse oberhalb von ca. 2000 kW erfordern zunehmend Maßnahmen zur Erfassung und Kontrolle der Verbrennungsvorgänge innerhalb der einzelnen Zylinder, um zeitnahe und zylinderindividuelle Steuer- bzw. Regelverfahren anwenden zu können. Sowohl die Laserzündung als auch die Zylinderdruckmessung sind kostenintensiv und technologisch anspruchsvoll, Beide Maßnahmen erfordern einen Zugang zum Brennraum.

Eine gattungsgemäße Laserzündkerze geht aus der DE 10 2009 029 428 A1 hervor, Der in dieser Schrift gelehrte wenigstens eine Drucksensor gestattet es, im Betrieb der Brennkraftmaschine den Zylinderdruck zu messen. Die Integration des Drucksensors gestattet es mit einem einzigen Brennraumzugang für die Laserzündung und die Ermittlung des Zylinderdruckes auszukommen.

Problematisch am Stand der Technik in Form der DE 10 2009 029 428 A1 ist die Tatsache, dass mit dem dort beschriebenen System nur eine relativ ungenaue Erfassung des Zylinderdruckes möglich ist.

Aufgabe der Erfindung ist es, bei Beibehaltung des Vorteiles eines einzigen Brennraumzuganges die Messgenauigkeit zu erhöhen.

Diese Aufgabe wird durch eine Laserzündkerze mit den Merkmalen des Anspruchs 1 gelöst.

Überlegungen und Versuche der Anmelderin haben gezeigt, dass es bei einer Laserzündkerze mit voneinander in axialer Erstreckung beabstandetem Dichtsitz und Befestigungsabschnitt zu einer Kraftaufnahme der Laserzündkerze nicht über das optische Fenster, sondern über eine Verformung des Zylinderkopfes kommt. Durch die Anordnung des wenigstens einen Drucksensors (in axialer Erstreckung des Gehäuses betrachtet) zwischen dem Dichtsitz und dem Befestigungsabschnitt ist es möglich, diese auf die Laserzündkerze einwirkenden Kräfte im Wesentlichen vollständig zu erfassen. Unter "Drucksensor" wird jede Art von Sensor bzw. elektrischer oder elektronischer Schaltung verstanden, die direkt oder indirekt die Bestimmung eines Druckes gestattet.

Weitere vorteilhafte Ausführungsformen der Erfindung sind in den abhängigen Ansprüchen defniert.

Ausführungsbeispiele der Erfindung seien außerdem anhand der Figuren diskutiert. Dabei zeigen:
- Fig.1: einen Querschnitt durch ein erstes Ausführungsbeispiel einer erfindungsgemäßen Laserzündkerze und
- Fig. 2a, 2b: zwei Detailansichten zu zwei Modifikationen der in der Figur 1 dargestellten Laserzündkerze.

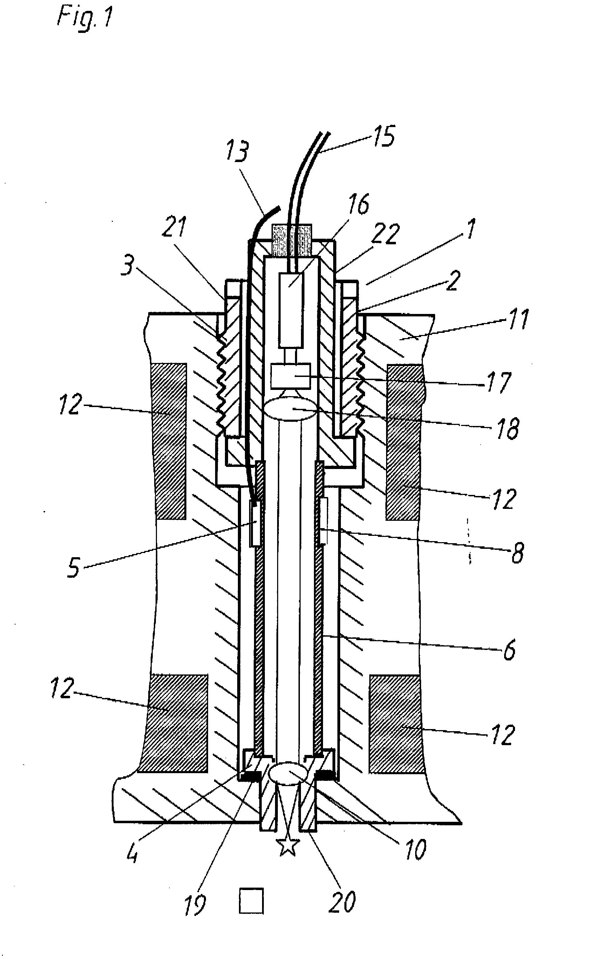

Figur 1 zeigt eine erfindungsgemäße Laserzündkerze 1 im Montagezustand im Zylinderblock 11 einer ansonsten nicht weiter dargestellten Brennkraftmaschine, welche vorzugsweise als (insbesondere stationärer) Gas-Otto-Motor, insbesondere in einer Leistungsklasse oberhalb ca. 2000 kW ausgebildet ist.

Die Laserzündkerze 1 weist ein Gehäuse 2 mit unterschiedlichen Abschnitten auf: Ausgehend aus der Nähe des nicht weiter dargestellten Brennraumes erstreckt sich ein Bauteil 20, welches einerseits als Halterung für ein optisches Fenster 10 fungiert und andererseits den Dichtsitz 4 der Laserzündkerze 1 aufweist. Daran schließt sich ein als Hülse 6 ausgebildeter Abschnitt des Gehäuses 2 an. Die Hülse 6 weist eine Querschnittsverjüngung 8 auf, in welcher ein als Dehnmessstreifen ausgebildeter Drucksensor 5 angeordnet ist. Die Querschnittsverjüngung 8 dient dazu, das als Folge der durch den Zylinderdruck induzierten Stauchung der Hülse 6 auftretende Messsignal des Drucksensors 5 zu verstärken. Die Hülse 6 ist mit einem oberen Abschnitt 22 des Gehäuses 2 verbunden. Der Abschnitt 22 dient einerseits als Aufnahme für die optische Baugruppe der Laserzündkerze 1 und ist andererseits mit einem Befestigungsabschnitt 3 des Gehäuses 2 der Laserzündkerze 1 verbunden. Der Befestigungsabschnitt 3 des Gehäuses 2 der Laserzündkerze 1 ist in diesem Ausführungsbeispiel an einem gesonderten Bauteil 21 ausgebildet, welches mit dem den Dichtsitz 4 aufweisenden Bauteil 20 in axialer Erstreckung der Laserzündkerze betrachtet nur über die Hülse 6 verbunden ist. Alle zwischen dem Befestigungsabschnitt 3 und dem Dichtsitz 4 auftretenden axialen Kräfte verlaufen daher über die Hülse 6 und können vom Drucksensor 5 erfasst werden.

Die optische Baugruppe ist an sich aus dem Stand der Technik bekannt und muss daher nicht im Detail beschrieben werden. Über eine Stromzuführung 15 wird ein Pumplaser 16 mit elektrischer Energie versorgt. Die Strahlung des Pumplasers 16 wird einem Zündlaser 17 zugeführt. Die Strahlung des Zündlasers 17 wird über eine Linse 18 kollimiert und über das hier als Sammellinse ausgebildete optische Fenster 10 in den Brennraum eingekoppelt.

Zwischen dem Bauteil 20 und dem brennraumnahen Ende der Bohrung für die Laserzündkerze 1 im Zylinderkopf 11 ist ein Dichtring 19 eingesetzt.

Die hier gezeigte Laserzündkerze 1 ist mit einem langen Gehäuse 2 ausgebildet, wobei die Länge der Laserzündkerze 1 mindestens fünfmal dem Durchmesser der Hülse 6 entspricht. Sowohl der Befestigungsabschnitt 3 als auch die optische Baugruppe ist im Montagezustand der Laserzündkerze 1 so weit wie möglich vom Brennraum entfernt, was in Bezug auf die Temperaturbelastung positiv ist.

Der Drucksensor 5 kann, wie in diesem Ausführungsbeispiel gezeigt, wenigstens einen Dehnmessstreifen aufweisen bzw. nur als solcher ausgebildet sein. Bei Verwendung von Dehnmessstreifen ist darauf zu achten, dass die Temperatur nicht über ca. 120° C ansteigt. Dies ist in der Version der Figur 1 einerseits durch die Positionierung des Drucksensors 5 relativ weit vom Brennraum entfernt und andererseits durch die Nähe der Kühlkammern 12 des Zylinderkopfes 11 sichergestellt.

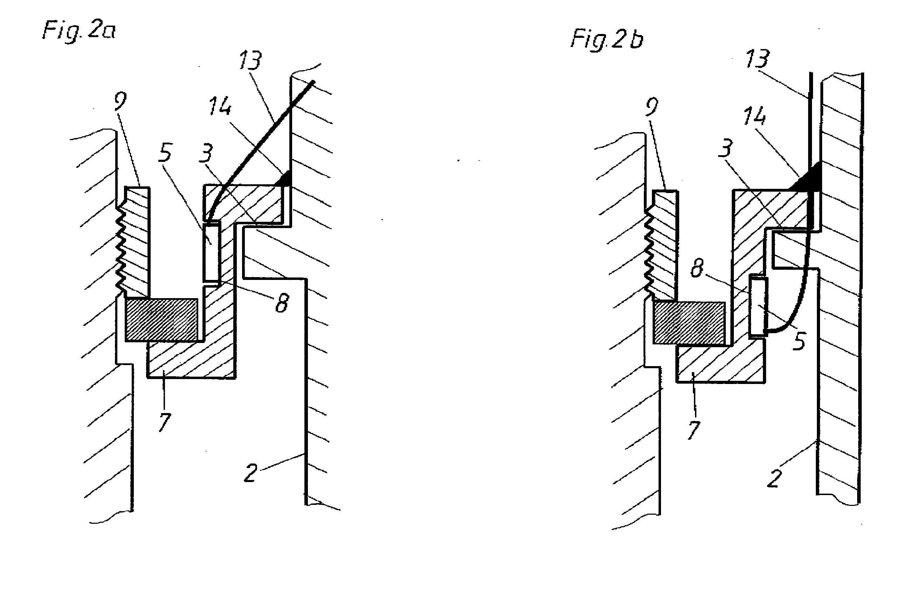

In der Variante der Figur 2a weist die Laserzündkerze 1 ein weiteres Bauteil in Form einer als Spannhülse ausgebildeten Hülse 7 auf. Der vermeintliche Nachteil eines zusätzlich erforderlichen Bauteils wird bei dieser Variante dadurch ausgeglichen, dass die Temperatur am Drucksensor 5 unterhalb von ca. 100°C gehalten werden kann und der Dehnmessstreifens des Drucksensors 5 sich in einer geschützten Position befindet. Dies gilt gleichermaßen für die Ausführungsform der Figur 2b.

Bei den Varianten der Figuren 2a und 2b wird das Gehäuse 2 der Laserzündkerze 1, welches mit dem Zylinderkopf 11 über eine Schraubhülse 9 verbunden ist, durch die als Spannhülse ausgebildete Hülse 7 in Richtung des Brennraumes gedrückt. Die bei den Figuren 2a und 2b eingezeichnete Schweißnaht 14 ist nicht unbedingt erforderlich. Die in den Figuren 2a und 2b nicht erkennbaren Details der Laserzündkerze 1 sind wie in Figur 1 ausgebildet.

Weist der Drucksensor 5 einen Dehnmessstreifen auf, so kann der Dehnmessstreifen einfach am Gehäuse 2 der Laserzündkerze 1 oder an den als Spannhülse ausgebildeten Hülse 7 oder an einem anderen geeigneten Bauteil angeklebt werden. Die Strom- bzw. Signalleitung für den Drucksensor 5 kann innerhalb oder knapp außerhalb des Gehäuses 2 der Laserzündkerze 1 geführt werden. Es kann eine Vereinigung der Leitungen für die Laserzündung mit jenen für den Drucksensor 5 in einer gemeinsamen Kabelführung vorgesehen sein.

## Patentansprüche

1. Laserzündkerze (1), mit einem eine axiale Erstreckung aufweisenden Gehäuse (2), einem Befestigungsabschnitt (3) zur Befestigung des Gehäuses (2) in einem Zylinderkopf (11) einer Brennkraftmaschine und wenigstens einem Drucksensor (5), **dadurch gekennzeichnet, dass** ein vom Befestigungsabschnitt (3) in axialer Erstreckung des Gehäuses (2) betrachtet beabstandeter Dichtsitz (4) vorgesehen ist und dass der wenigstens eine Drucksensor (5) in axialer Erstreckung des Gehäuses (2) betrachtet zwischen dem Dichtsitz (4) und dem Befestigungsabschnitt (3) angeordnet ist.

2. Laserzündkerze nach Anspruch 1, **dadurch gekennzeichnet, dass** der Befestigungsabschnitt (3) und der Dichtsitz (4) in axialer Erstreckung des Gehäuses (2) betrachtet um mehr als die halbe axiale Erstreckung des Gehäuses (2) voneinander beabstandet sind.

3. Laserzündkerze nach Anspruch 1 oder 2, **dadurch gekennzeichnet, dass** das Gehäuse (2) einen als Hülse (6) ausgebildeten Abschnitt aufweist oder mit einer gesondert vom Gehäuse (2) ausgebildeten Hülse (7) verbunden ist und dass der wenigstens eine Drucksensor (5) an der Hülse (6, 7) angeordnet ist.

4. Laserzündkerze nach Anspruch 3, **dadurch gekennzeichnet, dass** die Hülse (6, 7) eine Querschnittsverjüngung (8) aufweist und der wenigstens eine Drucksensor (5) im Bereich der Querschnittsverjüngung (8) angeordnet ist.

5. Laserzündkerze nach Anspruch 3 oder 4, **dadurch gekennzeichnet, dass** die Hülse (7) als Spannhülse ausgebildet ist, die einerseits mit dem Gehäuse (2) und andererseits mit einer Schraubhülse (9) verbunden ist.

6. Laserzündkerze nach einem der Ansprüche 1 bis 5, **dadurch gekennzeichnet, dass** der wenigstens eine Drucksensor (5) benachbart zum Befestigungsabschnitt (3) angeordnet ist.

7. Laserzündkerze nach einem der Ansprüche 1 bis 6, **dadurch gekennzeichnet, dass** die Laserzündkerze (1) ein optisches Fenster (10) aufweist.

8. Laserzündkerze nach einem der Ansprüche 1 bis 7, **dadurch gekennzeichnet, dass** zumindest der Dichtsitz (4) und der Befestigungsabschnitt (3) als voreinander gesonderte aber miteinander verbundene Bauteile (20, 21) ausgebildet sind.

9. Laserzündkerze nach Anspruch 8, **dadurch gekennzeichnet, dass** der wenigstens eine Drucksensor (5) an einem Bauteil angeordnet ist, das gesondert vom Dichtsitz (4) und vom Befestigungsabschnitt (3) ausgebildet ist, wobei der Dichtsitz (4) und der Befestigungsabschnitt (3) durch das den wenigstens einen Drucksensor (5) aufweisende Bauteil so miteinander verbunden sind, dass im Montagezustand der Laserzündkerze (1) in einem Zylinderkopf (11) einer Brennkraftmaschine alle auf die Laserzündkerze (1) axiale ausgeübten Kräfte über das den wenigstens einen Drucksensor (5) aufweisende Bauteil verlaufen.

10. Laserzündkerze nach einem der Ansprüche 1 bis 9, **dadurch gekennzeichnet, dass** der wenigstens eine Drucksensor (5) zumindest einen Dehnmessstreifen aufweist.
